# EUROPÄISCHE PATENTSCHRIFT

(11) **EP 3 130 081 B1**
(45) Veröffentlichungstag und Bekanntmachung des Hinweises auf die Patenterteilung: **16.05.2018**
(21) Anmeldenummer: 15706425.4
(22) Anmeldetag: 19.02.2015
(51) Int. Cl.: H04B 3/54

(54) **SERIELLES KOMMUNIKATIONSSYSTEM, PHOTOVOLTAIKANLAGE UND VERFAHREN ZUR SERIELLEN KOMMUNIKATION**
SERIAL COMMUNICATION SYSTEM, PHOTOVOLTAIC PLANT AND METHOD FOR SERIAL COMMUNICATION
SYSTEME DE COMMUNICATION EN SERIE, SYSTÈME PHOTOVOLTAÏQUE ET PROCEDE DE COMMUNICATION EN SERIE

(30) Priorität: 07.04.2014 DE 102014206651
(43) Veröffentlichungstag der Anmeldung: 15.02.2017
(73) Patentinhaber: Robert Bosch GmbH, 70442 Stuttgart (DE)
(72) Erfinder: POHLMANN, Martin, 70567 Stuttgart (DE); SCHIEMANN, Werner, 70734 Fellbach (DE)
(86) Internationale Anmeldenummer: PCT/EP2015/053455
(87) Internationale Veröffentlichungsnummer: WO 2015/154904

(56) Entgegenhaltungen:
- WO-A2-2015/061187
- US-A1- 2013 034 137
- E. ROMAN ET AL: "Intelligent PV Module for Grid-Connected PV Systems", IEEE TRANSACTIONS ON INDUSTRIAL ELECTRONICS, Bd. 53, Nr. 4, 1. Juni 2006 (2006-06-01), Seiten 1066-1073, XP055087344, ISSN: 0278-0046, DOI: 10.1109/TIE.2006.878327
- "ST7538Q FSK power ine transceiver", , 31. Juli 2006 (2006-07-31), Seiten 1-44, XP055186527, Gefunden im Internet: URL:http://www.st.com/st-web-ui/static/act ive/en/resource/technical/document/datashe et/CD00123477.pdf [gefunden am 2015-04-29]

## Beschreibung

Die vorliegende Erfindung betrifft ein serielles Kommunikationssystem, eine Photovoltaikanlage sowie ein Verfahren zur seriellen Kommunikation.

### Stand der Technik

E. ROMAN ET AL: "Intelligent PV Module for Grid-Connected PV Systems", 2006, offenbart ein Photovoltaiksystem umfassend eine Parallelschaltung mehrerer Paare von in Reihe geschalteten Photovoltaikmodulen. Das Photovoltaiksystem verfügt über eine Kontrolleinheit als Master, die einzelnen Photovoltaikmodule fungieren als Slaves. Die Kommunikation erfolgt dabei als Halbduplex unter Anwendung der Methode der Freuqenzumtastung (FSK), wofür eine entsprechende FSK-Kommunikationsschnittstelle vom Typ ST7538Q vorgesehen ist.

US 2013/034137 A1 offenbart eine Systemarchitektur und ein Verfahren, in denen ein Master-Modem ein Trägersignal über eine Drahtverbindung an ein Slave-Modem liefert. Die Impedanz der Drahtverbindung wird dabei in Abhängigkeit von durch das Slave-Modem bereitgestellten Daten variiert.

Bei der Kommunikation über Stromleitungen gibt es beispielsweise sogenannte Power-Line-Systeme, welche grundsätzlich eine parallele Verschaltung oder Anordnung der Teilnehmer aufweisen. Ein derartiges Power-Line-System ist in WO 2011/023526 A1 offenbart.

Des Weiteren gibt es die Möglichkeit, die Teilnehmer seriell zu verschalten, wie es beispielsweise in photovoltaischen Systemen vorgesehen ist. Möchte man in einem derartigen seriellen System über die bestehende Verkabelung kommunizieren, existieren Point-to-Point- oder Point-to-Multipoint-Übertragungen, bei denen ein Sender in einer Richtung mit einem Strom betrieben wird und der oder die anderen Sender in der entgegengesetzten Richtung mit einer Spannung betrieben werden. Damit wird gesichert, dass alle Teilnehmer die gesendete Information in vergleichbarer Güte empfangen können. Wählt man einen Master mit einem hohen Innenwiderstand, wie beispielsweise eine Stromquelle, und die weiteren Teilnehmer mit einem geringen Innenwiderstand, wie beispielsweise eine Spannungsquelle, können zwei Teilnehmer, das heißt ein Master und ein weiterer Teilnehmer, Informationen gleichzeitig übertragen. Derartige System können beispielsweise gemäß der HART Kommunikation (Highway Addressable Remote Transducer) arbeiten. Dies ist ein standardisiertes Kommunikationssystem zum Aufbau industrieller Feldbusse.

Bei Anwendung in der Photovoltaik beziehungsweise Solartechnik nimmt der Inverter oder Umrichter als zusätzliche Störquelle am System teil. Der Inverter hat überwiegend die Eigenschaften einer Spannungsquelle, er verhält sich also niederohmig oder niederimpedant. Da der Master einen Strom zur Kommunikation nutzt, kann das Vorhandensein des Inverters in der Kommunikation vom Master zum Teilnehmer, also hier einem PV-Modul, als nachrangig angesehen werden. Dies setzt eine entsprechende Lieferfähigkeit der Stromquelle des Masters voraus, sodass der Master den Strom einprägen kann.

Im Unterschied dazu kann bei der Kommunikation vom PV-Modul zum Master das Spannungssignal des Moduls nicht vom Spannungssignal des Inverters unterschieden werden. Die Ausgangssignale des Inverters treten also direkt als überlagertes Störsignal auf. Da abhängig vom technischen Aufbau des Inverters die Ausgangssignale im Frequenzbereich der Übertragung auftreten, kann nicht durch Filterung zwischen Stör- und Nutzsignal getrennt werden, was eine Kommunikation erschwert beziehungsweise unmöglich macht.

### Offenbarung der Erfindung

Erfindungsgemäß wird eine Photovoltaikanlage mit einem seriellen Kommunikationssystem zur Verfügung gestellt, welches eine hochimpedante Master-Einheit, mindestens eine niederimpedante Slave-Einheit in Form eines Photovoltaik-Moduls und einer niederimpedante Störquelle in Form eines Inverters umfasst, wobei der Inverter, das mindestens eine Photovoltaik-Modul und die Master-Einheit seriell verschaltet sind und die Master-Einheit eine Stromquelle aufweist, die eingerichtet ist, einen Strom in das Kommunikationssystem einzuprägen und die mindestens eine niederimpedante Slave-Einheit eine Spannungsquelle aufweist, die eingerichtet ist, eine Spannung auszugeben und die Master-Einheit und die mindestens eine Slave-Einheit jeweils eine Synchronisationseinheit aufweisen, die eingerichtet sind, die Kommunikation zwischen der Slave-Einheit und der Master-Einheit zu synchronisieren, wobei das Kommunikationssystem ausgebildet ist, sowohl als Halbduplex, als auch als Vollduplex betrieben zu werden. Erfindungsgemäß ist vorgesehen, dass der Strom der Stromquelle der Master-Einheit ein Wechselstrom ist und die Spannungsquelle der Slave-Einheit eine Gleichstromspannungsquelle ist, so dass der Wechselstrom mit dem Gleichstromsignal der Slave Einheit überlagert ist.

Die erfindungsgemäße Photovoltaikanlage hat den Vorteil, dass nun die bislang von den Slave-Einheiten nicht unterscheidbare Störquelle mittels der Synchronisationseinheiten aus der Kommunikation separiert wird. Anders ausgedrückt wird bei der Kommunikation vom Slave zum Master das Störsignal der Störquelle, welches nicht synchron zu den Übertragungs- oder Nutzsignalen ist, unterdrückt. Dies ermöglicht eine sichere Kommunikation auch unter diesen schwierigen Bedingungen.

Selbstverständlich kann - je nach Kommunikationsrichtung oder -modus - auch die Slave-Einheit als Master-Einheit agieren. Auch könnte die niederimpedanten Störquelle zur Teilnahme an der Kommunikation mit einer Synchronisationseinheit ausgestattet sein.

In einer besonderen Ausführungsform ist vorgesehen, dass die Synchronisationseinheit eine auf eine Synchronisationsfrequenz und/oder eine Synchronisationsphase einstellbare Sendevorrichtung und eine verschiedene Frequenzen empfangende und die Synchronisationsfrequenz und/oder die Synchronisationsphase detektierende Empfangsvorrichtung aufweist. Dies ermöglicht eine sichere Kommunikation innerhalb eines durch die Sendevorrichtung vorgegebenen Frequenzbandes mit einer hohen Störunterdrückung.

Auch ist es möglich, dass die Sendevorrichtung einen Frequenzgenerator aufweist und/oder die Empfangsvorrichtung eine synchron betriebene Abtast- und Halte-Schaltung aufweist. Vorteilig hierbei ist, dass die dafür benötigten Baugruppen wie zum Beispiel A/D Wandler meist schon vorhanden sind. Daher sind Änderungen in der Hardware gering, was die Kosten reduziert. Anstelle eines Frequenzgenerators kann beispielsweise auch eine gesteuerte Stromquelle oder dergleichen verwendet werden.

Ferner ist es möglich, dass das serielle Kommunikationssystem einen Übertragungsbereich zwischen 50 und 300 kHz, insbesondere zwischen 100 und 150 kHz, aufweist. Dieser Übertragungsbereich ist für eine Vielzahl von Anwendungen geeignet und erhöht die Vielseitigkeit des Systems.

Das serielle Kommunikationssystem kann ein Zweidrahtsystem aufweisen. Das Zweidrahtsystem ist das einfachste und kostengünstigste Kommunikationssystem, was jedoch von sich aus keine weiteren Möglichkeiten zur Verbesserung einer Kommunikation wie komplexere Systeme, beispielweise ein Bussystem, bieten. Durch die Erfindung wird das einfache Zweidrahtsystem in ein System mit hoher Störunterdrückung aufgewertet.

Gemäß einer bevorzugten Ausführungsform der Erfindung ist vorgesehen, dass die Master-Einheit eine Stromquelle aufweist, die eingerichtet ist, einen Strom in das Kommunikationssystem einzuprägen. Durch den Betrieb der Slave Einheit als Spannungsquelle sind vorteilhafterweise ein Halbduplex-Betrieb und auch ein Vollduplex-Betrieb möglich. Der Strom kann ein Wechselstrom sein, während die Spannungsquelle eine Gleichstromspannungsquelle sein kann, sodass der Wechselstrom dem Gleichstromsignal der Slave Einheiten überlagert ist.

Mit anderen Worten wird eine Photovoltaikanlage zur Verfügung gestellt mit einem niederimpedanten Inverter, mindestens einem niederimpedanten Photovoltaik-Modul und einer hochimpedanten Master-Einheit eines seriellen Kommunikationssystems, wobei der Inverter, das mindestens eine Photovoltaik-Modul und die Master-Einheit seriell verschaltet sind und wobei die Master-Einheit eine Stromquelle aufweist, die eingerichtet ist, einen Strom in das Kommunikationssystem einzuprägen und die Master-Einheit und das mindestens eine Photovoltaik-Modul jeweils eine Synchronisationseinheit aufweisen, die eingerichtet sind, die Kommunikation zwischen dem Photovoltaik-Modul und der Master-Einheit zu synchronisieren, wobei das Kommunikationssystem ausgebildet ist, sowohl als Halbduplex, als auch als Vollduplex betrieben zu werden. Es gelten die gleichen Vorteile und Modifikationen wie zuvor beschrieben. Die Erfindung ist für eine Photovoltaikanlage besonders geeignet, da der Inverter ein bislang nicht zu unterdrückender Störsender ist.

In einer besonderen Ausführungsform ist vorgesehen, dass die Synchronisationseinheit eine auf eine Synchronisationsfrequenz einstellbare Sendevorrichtung und eine verschiedene Frequenzen empfangende und die Synchronisationsfrequenz detektierende Empfangsvorrichtung aufweist. Zusätzlich oder alternativ kann auch auf die Phasenlage der Sendevorrichtung synchronisiert werden. Dies ermöglicht eine sichere Kommunikation innerhalb eines durch die Sendevorrichtung vorgegebenen Frequenzbandes mit einer hohen Störunterdrückung. Vorteilhafterweise kann ein Frequenzband gewählt werden, das für die Kommunikation in PV-Anlagen üblich ist.

Das erfindungsgemäße Verfahren zur seriellen Kommunikation zwischen einer hochimpedanten Master-Einheit, mindestens einer niederimpedanten Slave-Einheit in Form eines Photovoltaik-Moduls und einer niederimpedanten Störquelle in Form eines Inverters, wobei der Inverter, das mindestens eine Photovoltaik-Modul und die Master-Einheit seriell verschaltet sind und die Master-Einheit eine Stromquelle aufweist und einen Strom in ein serielles Kommunikationsnetzwerk einprägt und wobei die Slave-Einheit eine Spannungsquelle aufweist und eine Spannung ausgibt und die Master-Einheit und die mindestens eine Slave-Einheit jeweils eine Synchronisationseinheit aufweisen, die eingerichtet sind die Kommunikation zwischen der Slave-Einheit und der Master-Einheit zu synchronisieren, wobei das Kommunikationssystem als Halbduplex oder als Vollduplex betrieben wird, mit den Schritten:
- Senden eines Synchronisationssignals mit einer Synchronisationsfrequenz und/oder Synchronisationsphase durch die Master-Einheit;
- Empfangen des Synchronisationssignals durch eine Slave-Einheit und Detektieren der Synchronisationsfrequenz und/oder Synchronisationsphase; und
- Senden eines Signals durch die Slave-Einheit mit der Synchronisationsfrequenz und/oder Synchronisationsphase.
Erfindungsgemäß ist vorgesehen, dass der Strom der Stromquelle der Master-Einheit ein Wechselstrom ist und die Spannungsquelle der Slave-Einheit eine Gleichstromspannungsquelle ist, so dass der Wechselstrom mit dem Gleichstromsignal der Slave Einheit überlagert ist.

Es gelten die gleichen Vorteile und Modifikationen wie zuvor beschrieben. Die oben beschriebene Kommunikation wird von der Master-Einheit dahingehend gesteuert, dass sie die Synchronisationsfrequenz und/oder Synchronisationsphase vorgibt.

Vorteilhafterweise ist vorgesehen, dass die Master-Einheit einen Strom einprägt, während die Slave-Einheit eine Spannung ausgibt. Dies erlaubt einen Halbduplex- und Vollduplex-Betrieb.

### Zeichnungen

Ausführungsbeispiele der Erfindung werden anhand der Zeichnungen und der nachfolgenden Beschreibung näher erläutert. Es zeigen:
Figur 1 eine schematische Darstellung eines seriellen Kommunikationssystems,
Figur 2 eine schematische Darstellung einer Synchronisationseinheit des seriellen Kommunikationssystems, und
Figur 3 das Kammfilterverhalten der Synchronisationseinheit.

### Ausführungsformen der Erfindung

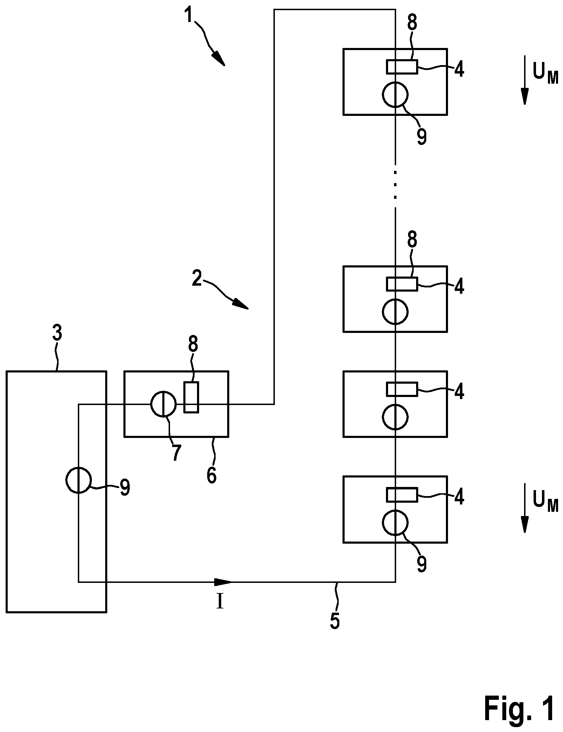

Figur 1 zeigt in beispielhafter Darstellung eine Photovoltaikanlage 1 mit einem seriellen Kommunikationssystem 2. Die PV-Anlage 1 umfasst einen Inverter 3 und mehrere PV-Module 4. Der Inverter 3 und die Module 4 sind über ein Zwei-Drahtsystem 5 beziehungsweise eine zweipolige Leitung seriell miteinander verbunden oder verschaltet. Ein Master 6 des seriellen Kommunikationssystems 2 ist ebenfalls seriell in dem Zwei-Drahtsystem 5 verschaltet. Der Master 6 kann als eigenständige Einheit ausgebildet oder in dem Inverter 3 integriert sein.

Zumindest die in Figur 1 dargestellten Komponenten Inverter 3, PV-Module 4 und Zwei-Drahtsystem 5 sind sowohl Teil der PV-Anlage 1 als auch des seriellen Kommunikationssystems 2. Die Einheiten spielen gewissermaßen eine Doppelrolle, da die Kommunikation zwischen den Elementen über das zum Energietransport ausgelegte Zwei-Drahtsystem 5 läuft.

Die Module 4 können beispielsweise in einem Strang der PV-Anlage 1 angeordnet sein, sodass der Inverter 3 ein Strang-Inverter sein kann. Der Inverter 3 stellt für die Kommunikation zwischen dem Master 6 und den Modulen 4 eine niederimpedante Störquelle dar, die sich aus Sicht des Masters 6 wie ein Modul 4 verhält.

Der Master 6 enthält eine Stromquelle 7 und hat entsprechend einen hohen Innenwiderstand beziehungsweise ist hochimpedant. Der Master 6 enthält ferner eine Synchronisationseinheit 8, mit welcher die Synchronisation in dem Kommunikationssystem 2 oder genauer gesagt über das Zwei-Drahtsystem 5 synchronisiert werden kann. Jedes der Module 4 enthält ebenfalls eine Synchronisationseinheit 8 sowie eine Spannungsquelle 9. Damit hat das Modul 4 einen geringen Innenwiderstand. Der Master 6 und ein als Slave betriebenes Modul 4 können gleichzeitig Informationen übertragen. Somit ist ein Halbduplex- als auch ein Vollduplexbetrieb des seriellen Kommunikationssystems 2 möglich. Dies wird dadurch ermöglicht, dass die Module 4 mit ihren Spannungsquellen 9, über denen jeweils die Spannung U_{M} anliegt, Informationen in entgegengesetzter Richtung zu den Informationen des Masters 6, dessen Stromquelle 7 einen Strom I einprägt, senden.

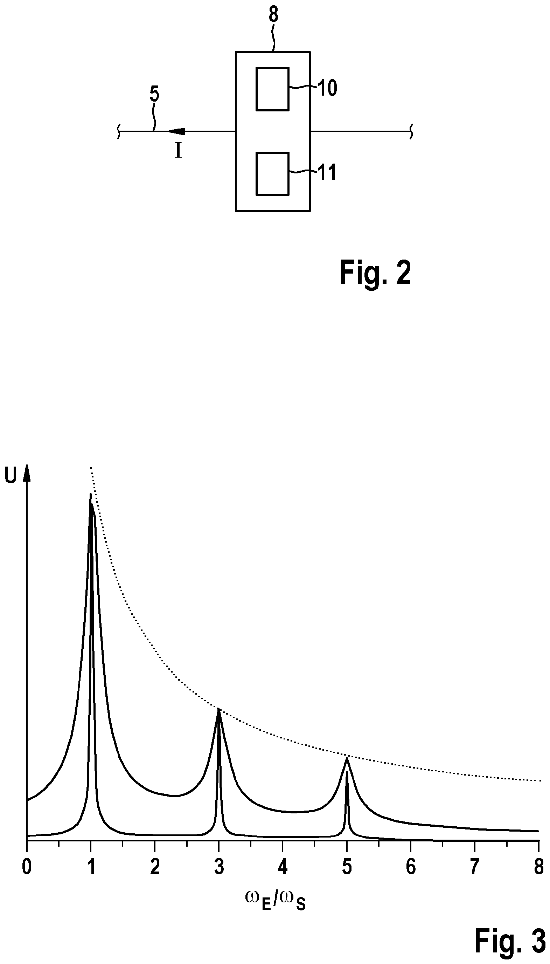

Wie in Figur 2 dargestellt enthält die Synchronisationseinheit 8 eine Sendevorrichtung 10 wie beispielsweise einen Frequenzgenerator zum Erzeugen eines Synchronisierungssignals und weiterer Signale wie zum Beispiel Adressierungen an eines, mehrere oder alle der Module 4. Mittels des Frequenzgenerators 10 wird eingestellt, mit welcher Frequenz die Stromquelle 7 den Strom in das Kommunikationssystem 2 beziehungsweise das Zwei-Drahtsystem 5 einprägt. Anstatt eines Frequenzgenerators können auch eine gesteuerte Stromquelle oder ähnliche Vorrichtungen eingesetzt werden. Der Strom I kann beispielsweise mit einer Frequenz von 125 kHz eingeprägt werden. Alternativ kann auch ein Frequenzumtastungsverfahren (FSK, Frequenz Shift Keying) verwendet werden. Dann können zum Beispiel Frequenzen von 110 kHz und 130 kHz verwendet werden.

Des Weiteren enthält jede Synchronisationseinheit 8 eine Empfangsvorrichtung 11 wie beispielsweise einen Synchrongleichrichter 11, der zum Beispiel eine synchron betriebene Abtast- und Halte-Schaltung aufweist. Der Synchrongleichrichter 11 ist dazu eingerichtet, die durch den Frequenzgenerator 10 vorgegebenen synchronisierten Frequenzen zu empfangen. Darüber hinaus detektiert der Synchrongleichrichter 11 die Synchronisationsfrequenz, um mit dieser die Sendevorrichtung 10 für die nächste Übertragung auf die Synchronisationsfrequenz einzustellen.

So sendet zum Beispiel der Master 6 ein Synchronisationssignal mit einer Synchronisationsfrequenz und/oder einer Synchronisationsphase in das Netzwerk 2, beispielsweise mit einer Adressierung und einer Signalanforderung an ein bestimmtes Modul 4. Die Empfangsvorrichtung 11 des Moduls 4 empfängt das Signal, detektiert und hält oder speichert die Synchronisationsfrequenz bzw. die Synchronisationsphase, um dann selbst ein Signal oder eine Nachricht mit der Synchronisationsfrequenz beziehungsweise der Synchronisationsphase in das Netzwerk zu schicken, das dann von dem Master 6 empfangen wird.

In Figur 3 ist ein entsprechendes Kammfilterverhalten eines Synchrongleichrichters oder anders ausgedrückt eines phasenselektiven Gleichrichters dargestellt. In dem Diagramm in Figur 3 ist die Spannung gegenüber dem Quotienten von Empfängerfrequenz geteilt durch Senderfrequenz aufgetragen. Wie aus dem Diagramm zu erkennen ist, lässt sich durch den synchronen Betrieb eine hohe Störunterdrückung erreichen. Die synchronisierten Peaks des Signals sind deutlich zu erkennen. Ein derartiger Synchrongleichrichter kann hier vorteilhaft als sehr schmalbandiger Filter eingesetzt werden.

Die Filtergüte kann zusätzlich durch angepasste sample-and-hold-Zeiten, also Zeiten für die Abtastung und das Halten, optimiert werden. Das eigentliche Kommunikationsband verläuft gemäß Figur 3 zum Beispiel zwischen 0,5 und 1,5. Störungen außerhalb des Kommunikationsbandes lassen sich einfach auf konventionelle Weise ausfiltern, sodass eine Kommunikation unabhängig beziehungsweise ungestört von der Störquelle 3 erfolgen kann.

## Patentansprüche

1. Photovoltaikanlage mit einem seriellen Kommunikationssystem (2), welches eine hochimpedante Master-Einheit (6), mindestens eine niederimpedante Slave-Einheit (4) in Form eines Photovoltaik-Moduls und eine niederimpedante Störquelle (3) in Form eines Inverters umfasst,
wobei der Inverter, das mindestens eine Photovoltaik-Modul und die Master-Einheit (6) seriell verschaltet sind und die Master-Einheit (6) eine Stromquelle (7) aufweist, die eingerichtet ist, einen Strom (I) in das Kommunikationssystem (2) einzuprägen und die mindestens eine niederimpedanten Slave-Einheit (4) eine Spannungsquelle (9) aufweist, die eingerichtet ist, eine Spannung auszugeben und die Master-Einheit (6) und die mindestens eine Slave-Einheit (4) jeweils eine Synchronisationseinheit (8) aufweisen, die eingerichtet sind, die Kommunikation zwischen der Slave-Einheit (4) und der Master-Einheit (6) zu synchronisieren, wobei das Kommunikationssystem (2) ausgebildet ist, sowohl als Halbduplex, als auch als Vollduplex betrieben zu werden,
**dadurch gekennzeichnet, dass**
der Strom (I) der Stromquelle (7) der Master-Einheit (6) ein Wechselstrom ist und die Spannungsquelle (9) der Slave-Einheit (4) eine Gleichstromspannungsquelle ist, so dass der Wechselstrom mit dem Gleichstromsignal der Slave Einheit (4) überlagert ist.

2. Photovoltaikanlage nach Anspruch 1, wobei die Synchronisationseinheit (8) eine auf eine Synchronisationsfrequenz und/oder Synchronisationsphase einstellbare Sendevorrichtung (10) und eine verschiedene Frequenzen empfangende und die Synchronisationsfrequenz und/oder Synchronisationsphase detektierende Empfangsvorrichtung (11) aufweist.

3. Photovoltaikanlage nach Anspruch 1 oder 2, wobei die Sendevorrichtung (10) einen Frequenzgenerator aufweist und/oder die Empfangsvorrichtung (11) eine synchron betriebene Abtast- und
Halte-Schaltung aufweist.

4. Photovoltaikanlage nach einem der Ansprüche 1 bis 3, wobei das serielle Kommunikationssystem (2) einen Übertragungsbereich zwischen 50 und 300 kHz, insbesondere zwischen 100 und 150 kHz, aufweist.

5. Photovoltaikanlage nach einem der Ansprüche 1 bis 4, wobei das serielle Kommunikationssystem (2) ein Zweidrahtsystem (5) aufweist.

6. Verfahren zur seriellen Kommunikation zwischen einer hochimpedanten Master-Einheit (6), mindestens einer niederimpedanten Slave-Einheit (4) in Form eines Photovoltaik-Moduls und einer niederimpedanten Störquelle (3) in Form eines Inverters, wobei der Inverter, das mindestens eine Photovoltaik-Modul und die Master-Einheit (6) seriell verschaltet sind und die Master-Einheit (6) eine Stromquelle (7) aufweist und einen Strom (I) in ein serielles Kommunikationsnetzwerk (2) einprägt und wobei die Slave-Einheit (4) eine Spannungsquelle (9) aufweist und eine Spannung ausgibt und die Master-Einheit (6) und die mindestens eine Slave-Einheit (4) jeweils eine Synchronisationseinheit (8) aufweisen, die eingerichtet sind, die Kommunikation zwischen der Slave-Einheit (4) und der Master-Einheit (6) zu synchronisieren, wobei das Kommunikationssystem (2) als Halbduplex oder als Vollduplex betrieben wird, mit den Schritten:
- Senden eines Synchronisationssignals mit einer Synchronisationsfrequenz und/oder Synchronisationsphase durch die Master-Einheit (6);
- Empfangen des Synchronisationssignals durch eine Slave-Einheit (4) und Detektieren der Synchronisationsfrequenz und/oder Synchronisationsphase; und
- Senden eines Signals durch die Slave-Einheit (4) mit der Synchronisationsfrequenz und/oder Synchronisationsphase,
dadurch gekennzeichent, dass
der Strom (I) der Stromquelle (7) der Master-Einheit (6) ein Wechselstrom ist und die Spannungsquelle (9) der Slave-Einheit (4) eine Gleichstromspannungsquelle ist, so dass der Wechselstrom mit dem Gleichstromsignal der Slave Einheit (4) überlagert ist.

## Claims

1. Photovoltaic installation having a serial communication system (2), which comprises a high-impedance master unit (6), at least one low-impedance slave unit (4) in the form of a photovoltaic module and a low-impedance interference source (3) in the form of an inverter, wherein the inverter, the at least one photovoltaic module and the master unit (6) are interconnected in series and the master unit (6) has a current source (7), which is configured to impress a current (I) into the communication system (2), and the at least one low-impedance slave unit (4) has a voltage source (9), which is configured to output a voltage, and the master unit (6) and the at least one slave unit (4) each have a synchronization unit (8), which synchronization units are configured to synchronize the communication between the slave unit (4) and the master unit (6), wherein the communication system (2) is designed to be operated both as a half-duplex and as a full-duplex,
**characterized in that**
the current (I) of the current source (7) of the master unit (6) is an alternating current and the voltage source (9) of the slave unit (4) is a DC voltage source, with the result that the alternating current is superposed with the DC signal of the slave unit (4).

2. Photovoltaic installation according to Claim 1, wherein the synchronization unit (8) has a transmission apparatus (10) that can be adjusted to a synchronization frequency and/or synchronization phase and a reception apparatus (11) that receives different frequencies and detects the synchronization frequency and/or synchronization phase.

3. Photovoltaic installation according to Claim 1 or 2, wherein the transmission apparatus (10) has a frequency generator and/or the reception apparatus (11) has a synchronously operated sample and hold circuit.

4. Photovoltaic installation according to one of Claims 1 to 3, wherein the serial communication system (2) has a transmission region between 50 and 300 kHz, in particular between 100 and 150 kHz.

5. Photovoltaic installation according to one of Claims 1 to 4, wherein the serial communication system (2) has a two-wire system (5).

6. Method for serial communication between a high-impedance master unit (6), at least one low-impedance slave unit (4) in the form of a photovoltaic module and a low-impedance interference source (3) in the form of an inverter, wherein the inverter, the at least one photovoltaic module and the master unit (6) are interconnected in series and the master unit (6) has a current source (7) and impresses a current (I) into a serial communication network (2) and wherein the slave unit (4) has a voltage source (9) and outputs a voltage and the master unit (6) and the at least one slave unit (4) each have a synchronization unit (8), which synchronization units are configured to synchronize the communication between the slave unit (4) and the master unit (6), wherein the communication system (2) is operated as a half-duplex or as a full-duplex, said method having the following steps:
- transmission of a synchronization signal at a synchronization frequency and/or synchronization phase by the master unit (6);
- reception of the synchronization signal by a slave unit (4) and detection of the synchronization frequency and/or synchronization phase; and
- transmission of a signal by the slave unit (4) at the synchronization frequency and/or synchronization phase,
**characterized in that**
the current (I) of the current source (7) of the master unit (6) is an alternating current and the voltage source (9) of the slave unit (4) is a DC voltage source, with the result that the alternating current is superposed with the DC signal of the slave unit (4).

## Revendications

1. Installation photovoltaïque comportant un système de communication série (2), qui comprend une unité maîtresse à haute impédance (6), au moins une unité esclave à basse impédance (4) sous la forme d'un module photovoltaïque et une source perturbatrice à basse impédance (3) sous la forme d'un onduleur, dans laquelle l'onduleur, l'au moins un module photovoltaïque et l'unité maîtresse (6) sont connectés en série et l'unité maîtresse (6) comporte une source de courant (7) qui est conçue pour appliquer un courant (I) au système de communication (2), et l'au moins une unité esclave à basse impédance (4) comporte une source de tension (9) qui est conçue pour délivrer une tension, et l'unité maîtresse (6) et l'au moins une unité esclave (4) comportent des unités de synchronisation (8) respectives qui sont conçues pour synchroniser la communication entre l'unité esclave (4) et l'unité maîtresse (6), dans laquelle le système de communication (2) est conçu pour être utilisé à la fois en semi-duplex et en duplex intégral,
**caractérisée en ce que** le courant (I) de la source de courant (7) de l'unité maîtresse (6) est un courant alternatif et **en ce que** la source de tension (9) de l'unité esclave (4) est une source de tension continue de telle sorte que le courant alternatif est superposé au signal de courant continu de l'unité esclave (4).

2. Installation photovoltaïque selon la revendication 1, dans laquelle l'unité de synchronisation (8) comporte un dispositif émetteur (10) réglable sur une fréquence de synchronisation et/ou une phase de synchronisation et un dispositif récepteur (11) recevant des fréquences différentes et détectant la fréquence de synchronisation et/ou la phase de synchronisation.

3. Installation photovoltaïque selon la revendication 1 ou 2, dans laquelle le dispositif émetteur (10) comporte un générateur de fréquence et/ou le dispositif récepteur (11) comporte un circuit d'échantillonnage et de maintien fonctionnant de manière synchrone.

4. Installation photovoltaïque selon l'une des exigences 1 à 3, dans laquelle le système de communication série (2) présente une plage de transmission comprise entre 50 et 300 kHz, en particulier entre 100 et 150 kHz.

5. Installation photovoltaïque selon l'une des revendications 1 à 4, dans laquelle le système de communication série (2) comprend un système bifilaire (5) .

6. Procédé de communication série entre une unité maîtresse à haute impédance (6), au moins une unité esclave à basse impédance (4) sous la forme d'un module photovoltaïque et une source perturbatrice à basse impédance (3) sous la forme d'un onduleur, dans laquelle l'onduleur, l'au moins un module photovoltaïque et l'unité maîtresse (6) sont connectés en série et l'unité maîtresse (6) comporte une source de courant (7) et applique un courant (I) à un réseau de communication série (2), et dans laquelle l'unité esclave (4) comporte une source de tension (9) et délivre une tension, et l'unité maîtresse (6) et l'au moins une unité esclave (4) comportent des unités de synchronisation (8) respectives qui sont conçues pour synchroniser la communication entre l'unité esclave (4) et l'unité maîtresse (6), dans laquelle le système de communication (2) est utilisé en semi-duplex ou en duplex intégral, comprenant les étapes suivantes :
- l'émission par l'unité maîtresse (6) d'un signal de synchronisation ayant une fréquence de synchronisation et/ou une phase de synchronisation ;
- la réception par une unité esclave (4) du signal de synchronisation et la détection de la fréquence de synchronisation et/ou de la phase de synchronisation ; et
- l'émission par l'unité esclave (4) d'un signal ayant la fréquence de synchronisation et/ou la phase de synchronisation,
**caractérisée en ce que** le courant (I) de la source de courant (7) de l'unité maîtresse (6) est un courant alternatif et **en ce que** la source de tension (9) de l'unité esclave (4) est une source de tension continue, de sorte que le courant alternatif est superposé au signal de courant continu de l'unité esclave (4).
